# EUROPÄISCHE PATENTSCHRIFT

(11) **EP 2 807 016 B1**
(45) Veröffentlichungstag und Bekanntmachung des Hinweises auf die Patenterteilung: **28.06.2017**
(21) Anmeldenummer: 13702613.4
(22) Anmeldetag: 25.01.2013
(51) Int. Cl.: B29C 69/00, B60N 2/68, B29C 45/14, B29C 45/17, B29C 65/00, B29C 65/02, B29L 31/30

(54) **VERFAHREN ZUR HERSTELLUNG EINES BAUTEILS UND BAUTEIL**
METHOD FOR PRODUCING A COMPONENT AND COMPONENT
PROCÉDÉ DE FABRICATION D'UN COMPOSANT ET COMPOSANT

(30) Priorität: 25.01.2012 DE 102012201043; 14.03.2012 DE 102012204036
(43) Veröffentlichungstag der Anmeldung: 03.12.2014
(73) Patentinhaber: Johnson Controls GmbH, 51399 Burscheid (DE)
(72) Erfinder: FLOCK, Dustin, 51069 Köln (DE); MEIER, Bernd, 57439 Attendorn (DE); NUYAN, Vedat, 42287 Wuppertal (DE); KOEVER, Axel, 50859 Köln (DE)
(74) Vertreter: Finger, Catrin
(86) Internationale Anmeldenummer: PCT/EP2013/051456
(87) Internationale Veröffentlichungsnummer: WO 2013/110770

(56) Entgegenhaltungen:
- WO-A1-00/78532
- DE-A1-102008 046 602
- DE-B4- 19 747 021
- HABERSTROH E ET AL: "MIT GASDRUCK ZU LSR-FORMTEILEN MIT FUNKTIONELLEN HOHLRAEUMEN", FACHTAGUNG SILICONELASTOMERE - INNOVATIVE WERKSTOFFE FUER DASNEUE JAHRTAUSEND, XX, XX, 4. April 2001 (2001-04-04), Seiten K/02-K/12,I, XP001157859,
- LANXESS: "Technische Information: Organoblech-die Innovation in der Hybridtechnik, Geringes Gewicht und hohe Festigkeit", INTERNET CITATION, 25. Februar 2009 (2009-02-25), Seiten 1-2, XP002664236, Gefunden im Internet: URL:http://techcenter.lanxess.com/scp/emea /de/docguard/TI_2009-003_DE_Organoblech.pd f?docId=12427922 [gefunden am 2011-11-23]
- ROLF LEONARD: "Einsatz von Organoblech forciert den Leichtbau in der Hybridtechnik; Bauteile immer komplexer und leichter", INTERNET CITATION, 23. August 2010 (2010-08-23), Seite 1, XP002664235, Gefunden im Internet: URL:http://www.autokon.de/home/-/article/1 6537511/29464061/Bauteile-immer-komplexer- und-leichter/art_co_INSTANCE_0000/maximize d/ [gefunden am 2011-11-23]
- Douglas A. Mccarville ET AL: "Processing and joining of thermoplastic composites" In: "Composites", 1. Dezember 2001 (2001-12-01), ASM International, USA, XP055066726, ISBN: 978-0-87-170703-1 Seiten 633-645, Seite 633, Spalte 1 Seite 637, Spalte 3 Seite 639, Spalte 1 Seite 640, Spalte 3

## Beschreibung

Die Erfindung betrifft ein Verfahren zur Herstellung eines zumindest aus einem Strukturbauteil und einem Organoblech gebildeten Bauteils gemäß dem Oberbegriff des Patentanspruchs 1 sowie ein nach dem Verfahren hergestelltes Bauteil.

Strukturbauteile aus Faserverbundstrukturen, z. B. sogenannte Organobleche, sind endlosfaserverstärkte Thermoplastplatten und im Stand der Technik z.B. zur Herstellung von Sitzlehnenrückwänden bekannt. Beispielsweise wird ein Organoblech in einem Werkzeug entsprechend umgeformt und anschließend mit Funktionselementen wie z.B. Rippen versehen, welche vorzugsweise aufgespritzt werden. Solche Organobleche sind beispielsweise durch die Beiträge von Leonard sowie einer weiteren Firmenpublikation bekannt (Leonard, R., 2010: Einsatz von Organoblech forciert den Leichtbau in der Hybridtechnik; http://www.autokon.de/home/- /article/16537511/29464061/Bauteile-immer-komplexer-undleichter/art co INSTANCE 0000/maximized/ und LANXESS: Technische Information: Organoblech - die Innovation in der Hybridtechnik; http://techcenter.lanxess.com/scp/emea/de/docguard/TI_2009-003_DE_ Organoblech.pdf?docld=12427922). Zur Herstellung von Strukturbauteilen in Form von Hohlkörpern ist das sogenannte Fit-Hybrid Verfahren bekannt, mittels welchem das Umformen eines Organoblechs und ein gleichzeitiges Spritzgießen in einem Verarbeitungsschritt möglich sind. Üblicherweise werden die Profile mittels eines nachträglichen Klebeprozesses geschlossen.

Durch McCarville und Schaefer sind Verfahren zum stoffschlüssigen Verbinden von Thermoplast-Kompositen, insbesondere von gefüllten Kunststoffen erläutert (McCarville, D. A. und Schaefer, H. A., 2001: Processing and Joining of Thermoplastic Composites; Composites, Seiten 633 - 645).

Dazu offenbart die DE 197 47 021 B4 ein Verfahren zum Spritzgießen endlosfaserverstärkter Hohlkörper, wobei beliebige Schlauchgeflechte ein- oder mehrlagig durch Verwendung von Vorrichtungen so in ein Spritzgießwerkzeug positioniert und fixiert werden, dass bei der Injektion der Kunststoffschmelze in die Geflechte, diese a) von innen heraus von der Kunststoffschmelze durchströmt werden und so diese Geflechte vollständig in Kunststoff eingebettet werden und anschließend durch ein beliebiges Verfahren der Gasinjektionstechnik ein Hohlraum erzeugt wird oder dass durch die Verwendung entsprechend dichter Geflechte, diese b) nicht von der Kunststoffschmelze durchströmt werden, sondern durch die Schmelzeinjektion und den Schmelzenachdruck so an die Werkzeugwände angelegt werden, dass diese Geflechte die Außenhaut des Formteils bilden und anschließend durch ein beliebiges Verfahren der Gasinjektionstechnik ein Hohlraum erzeugt wird.

Die Nutzung des Gasinjektionsverfahrens bei der Herstellung von hohlen Strukturbauteilen ist durch Haberstroh eingehender erläutert (Haberstroh, E. et al., 2001: Mit Gasdruck zu LSR-Formteilen mit funktionellen Hohlräumen, Fachtagung Siliconelastomere - Innovative Werkstoffe für das neue Jahrtausend, 2 - 12).

In der DE 10 2008 046 602 A1 wird ein Verfahren zur Herstellung eines Bauteils mit einem Hohlprofil beschrieben. Im Verfahren wird ein faserverstärkter Schlauch in ein Spritzgießwerkzeug eingelegt, es wird ein Gießwerkstoff in das Spritzgießwerkzeug eingespritzt, wobei der faserverstärkte Schlauch vom Gießwerkstoff umgossen wird, und anschließend wird ein Injektionsverfahren zur Entfernung von überschüssigem Gießwerkstoff in dem als Hohlprofil ausgestalteten Abschnitts des Bauteils angewendet.

Aus der DE 10 2007 036 660 A1 sind ein Verfahren und eine Vorrichtung zur Herstellung eines verstärkten Composite-Produktes in einer Spritzgießmaschine mit einer Plastifizier- und Einspritzeinrichtung sowie einer Schließeinheit, in der zumindest ein Formwerkzeug aufgenommen ist, bekannt. Dabei wird ein Gewebematerial in eine geöffnete Werkzeugform eingelegt, die Werkzeugform geschlossen und dabei das Gewebematerial in einer ersten Kavität umgeformt, wobei das Gewebematerial unter Wärmeeinwirkung vollständig konsolidiert wird. Die Werkzeugform wird geöffnet, das umgeformte vollkonsolidierte Produkt umgesetzt, die Werkzeugform unter Ausbildung einer zweiten gegenüber der ersten Kavität vergrößerten Kavität geschlossen und das Kunststoffmaterial in die zweite Kavität eingebracht, wobei sich das umgeformte vollkonsolidierte Gewebe mit dem spritzgegossenen Matrixmaterial verbindet.

Aufgabe der vorliegenden Erfindung ist es, ein gegenüber dem Stand der Technik verbessertes und insbesondere kostengünstigeres Verfahren zur Herstellung eines zumindest aus einem Strukturbauteil und einem Organoblech gebildeten Bauteils anzugeben.

Hinsichtlich des Verfahrens wird die Aufgabe erfindungsgemäß durch die in Anspruch 1 angegebenen Merkmale gelöst.

Bei einem Verfahren zur Herstellung eines aus zumindest einem Strukturbauteil und einem Organoblech gebildeten Bauteils wird in einem ersten Schritt ein Gewebeschlauch in einer Kontur eines Werkzeugs angeordnet und anschließend das Werkzeug geschlossen, weiterhin wird in einem zweiten Schritt ein Kunststoff, insbesondere eine Schmelze, in den in dem geschlossenen Werkzeug angeordneten Gewebeschlauch injiziert und in einem dritten Schritt ein Fluid und/oder ein Stützelement in den Gewebeschlauch unter Bildung eines Hohlraums in dem Gewebeschlauch eingeführt. Der Kunststoff, insbesondere die Schmelze, ist bevorzugt ein flüssiger Kunststoff, z. B. ein Thermoplast oder Duroplast, mit einer entsprechend über dessen Schmelzpunkt liegenden Temperatur. Nach Erkalten des Kunststoffs, insbesondere der Schmelze, bildet diese zusammen mit eingebetteten Fasern des Gewebeschlauches ein hohles Strukturbauteil. Darüber hinaus wird ein Organoblech umgeformt und mit einem Kunststoff hinterspritzt, wobei das umgeformte und zumindest bereichsweise hinterspritzte Organoblech stoffschlüssig mit dem hohlen Strukturbauteil zur Bildung des Bauteils verbunden wird.

Das Fluid und/oder das Stützelement weist vorzugsweise eine niedrige Temperatur auf, so dass der Kunststoff, insbesondere die Schmelze, nach Einbringen des Fluids in den Gewebeschlauch erkaltet. Damit liegen die Fasern des Gewebeschlauchs eingebettet in dem erkalteten Kunststoff, z. B. in der erkalteten Schmelze, wodurch ein endlosfaserverstärktes, thermoplastisches Strukturbauteil mit einem Hohlkörperprofil hergestellt ist. Mittels des Verfahrens ist somit die Herstellung eines Hohlkörperprofils ohne zusätzliches Fügeverfahren möglich, wobei anhand des geschlossenen Hohlprofils das Strukturbauteil in vorteilhafter Art und Weise eine vergleichsweise hohe Torsionssteifigkeit aufweist. Damit ist das Strukturbauteil gegenüber Strukturbauteilen mit einem offenen Profil gewichtsreduziert und besonders biegesteif.

In einer bevorzugten Ausführung der Erfindung wird das Fluid mit einem vorbestimmbaren Druck in den Gewebeschlauch eingeführt, wodurch der injizierte Kunststoff oder die injizierte Schmelze durch den Gewebeschlauch geströmt wird und sich vorzugsweise gleichmäßig , insbesondere in die Wandung des Gewebeschlauches, verteilt, wodurch der Gewebeschlauch weiter in den Kunststoff oder in die Schmelze eingebettet wird. Bei dem Fluid handelt es sich beispielsweise um Wasser. Alternativ wird als Stützelement ein aufblasbares Hüllelement, z. B. ein Ballon, in ein offenes Ende des Gewebeschlauchs, eingeführt und dort derart mittels eines insbesondere kalten Fluids, z. B. Luft, Gas oder Wasser, mit einem vorbestimmbaren Druck aufgeblasen, dass ein Hohlraum im Gewebeschlauch ausgetrieben wird. Mit anderen Worten: Der Gewebeschlauch wird entlang seiner Längsausdehnung unter Bildung eines länglichen Hohlraumes entsprechend aufgeblasen und gestützt, so dass der Gewebeschlauch weiter in den bereits injizierten Kunststoff oder die bereits injizierte Schmelze eingebettet wird, bis der Kunststoff oder die Schmelze zusammen mit den eingebetteten Fasern des Gewebeschlauches erkaltet ist. Anschließend kann das Stützelement entfernt werden oder auch im Strukturbauteil verbleiben.

Eine weitere Alternative sieht vor, dass als Stützelement ein Stützmaterial, wie z. B. ein Schaummaterial, in ein offenes Ende des Gewebeschlauches zur Austreibung des Hohlraums im Gewebeschlauch eingebracht wird. Zweckmäßigerweise verbleibt das Schaummaterial im Strukturbauteil.

Zur Optimierung des Strukturbauteils hinsichtlich der Torsionssteifigkeit wird dieses mit einem Organoblech kombiniert. Dazu wird erfindungsgemäß ein Organoblech umgeformt, mit einem Kunststoff zumindest bereichsweise oder vollständig hinterspritzt und anschließend stoffschlüssig mit dem Strukturbauteil verbunden. Dabei wird das Organoblech mit Kunststoff derart hinterspritzt, dass eine verstärkende Struktur, z. B. eine Rippenstruktur, gebildet ist.

Um eine optimale stoffschlüssige Verbindung zwischen dem Strukturbauteil und dem Organoblech sicherzustellen, wird das Organoblech zumindest bereichsweise erwärmt.

Zur Herstellung des Strukturbauteils ist eine Vorrichtung mit einem Werkzeug vorgesehen, mittels welcher erfindungsgemäß ein Gewebeschlauch in einer Kontur des Werkzeugs anordenbar und anschließend das Werkzeug schließbar ist. Weiterhin ist ein Kunststoff, insbesondere eine Schmelze, in den in dem geschlossenen Werkzeug angeordneten Gewebeschlauch injizierbar und ein Fluid in den Gewebeschlauch einführbar. Das Werkzeug ist vorzugsweise als Kombinationswerkzeug zum Umformen und Hinterspritzen eines herzustellenden Strukturbauteils ausgebildet.

Ein nach dem Verfahren hergestelltes Bauteil umfasst zumindest ein aus einem erkalteten Kunststoff oder einer erkalteten Schmelze mit eingebetteten Fasern eines Gewebeschlauches gebildetes Strukturbauteil und ein umgeformtes und mit einem Kunststoff hinterspritztes Organoblech, das mit dem Strukturbauteil stoffschlüssig verbunden ist.

Mittels der Vorrichtung ist ein Strukturbauteil mit einem geschlossenen Hohlprofil und somit ein endlosfaserverstärktes Strukturbauteil mit einem Hohlkörperprofil herstellbar, welches ein vergleichsweise hohes Flächenträgheitsmoment aufweist. Dadurch kann z.B. ein Träger einer Sitzlehnenrückwand schmaler gestaltet werden als ein Träger mit offenem Profil, wodurch Material- und Gewichtseinsparungen möglich sind. Die Sitzlehnenrückwand kann leichter und günstiger hergestellt werden. Zudem kann eine Sitzstruktur belastungsgerecht konstruiert und gefertigt werden.

Anhand der beigefügten schematischen Figuren wird die Erfindung näher erläutert.

Dabei zeigen:
- Figur 1: schematisch eine Schnittdarstellung einer erfindungsgemäßen Vorrichtung zur Herstellung eines Strukturbauteils nach einem ersten, zweiten und dritten Schritt ,
- Figuren 1A, 1B: schematisch verschiedene Stützelement zur Austreibung eines Hohlraums im Strukturbauteil im dritten Schritt,
- Figur 2: schematisch eine Schnittdarstellung, insbesondere ein Längsschnitt, eines Strukturbauteils,
- Figur 3: schematisch eine weitere Schnittdarstellung, insbesondere ein Querschnitt, des Strukturbauteils verbunden mit einem Organoblech zur Bildung eines Bauteils, und
- Figur 4: schematisch eine perspektivische Ansicht eines Fahrzeugsitzes mit einem darauf positionierten Fahrzeuginsassen.

Einander entsprechende Teile sind in allen Figuren mit den gleichen Bezugszeichen versehen.

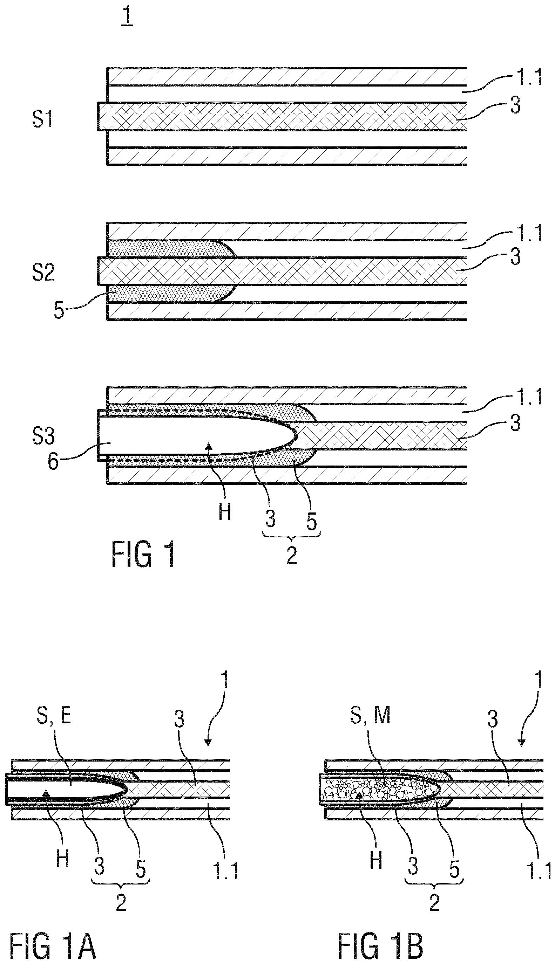

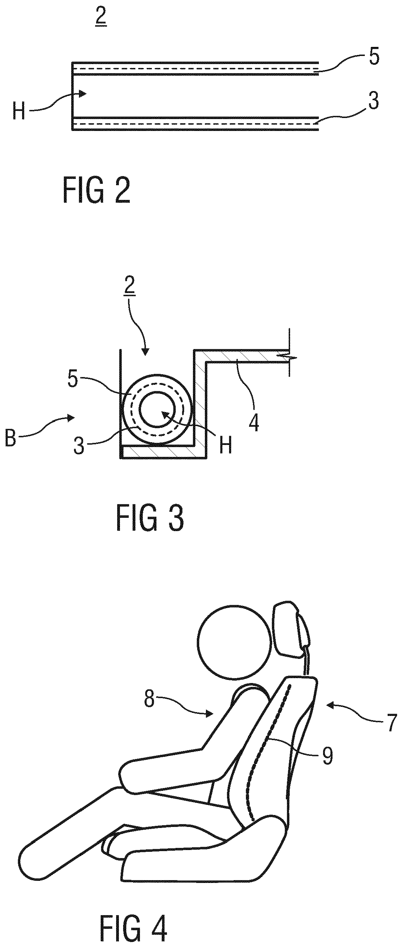

Figur 1 zeigt schematisch eine Schnittdarstellung, insbesondere einen Längsschnitt, einer Vorrichtung 1 zur Herstellung eines Strukturbauteils 2. Figur 2 zeigt schematisch einen Längsschnitt des Strukturbauteils 2 und Figur 3 einen Querschnitt des Strukturbauteils 2, wobei das Strukturbauteil mit einem Organoblech 4 verbunden ist und ein Bauteil B bilden. Ein Organoblech 4 ist ein flächiges Halbzeug aus einem thermoplastischen Kunststoff, in welchen ein Gewebe aus Glas-, Carbon- und/oder Aramidfasern oder einer Mischform aus diesen derart eingebracht ist, dass die Fasern vollständig mit thermoplastischem Kunststoff benetzt sind. Organobleche 4 sind somit endlosfaserverstärkte Thermoplastplatten.

Die Vorrichtung 1 wird gemäß Figur 1 während eines ersten Schritts S1, eines zweiten Schritts S2 und eines dritten Schritts S3 dargestellt (von oben nach unten betrachtet).

Im vorliegenden Ausführungsbeispiel umfasst die Vorrichtung 1 ein Werkzeug 1.1, welches vorzugsweise als ein Kombinationswerkzeug aus einem Formwerkzeug und einem Spritzgusswerkzeug gebildet ist. Beispielsweise ist das Werkzeug 1.1 als ein zweiteiliger, eine Kavität bildender Verbundkörper gebildet, welcher einen ersten Formkörper und einen zweiten Formkörper umfasst. Dabei weist einer der Formkörper ein Umformprofil als Positivkontur des herzustellenden Strukturbauteils 2 und der andere der Formkörper eine entsprechend korrespondierende Aussparung auf. Die Positivkontur und die Aussparung bilden dabei die Kavität des Werkzeugs 1.1.

Das Werkzeug 1.1 ist vorzugsweise aus einem Metall oder einer Metalllegierung gebildet. Alternativ ist das Werkzeug 1.1 aus einer Keramik oder einem Kunststoff geformt, wobei dazu das Werkzeug 1.1 zumindest im Bereich der Kavität mit einer Metallbeschichtung versehen ist.

Im ersten Schritt S1 wird ein Gewebeschlauch 3 in die Positivkontur des Werkzeugs 1.1 eingelegt. Anschließend wird das Werkzeug 1.1 geschlossen. Das Schließen des Werkzeugs 1.1 kann dabei manuell oder bevorzugt automatisiert erfolgen.

Im zweiten Schritt S2 wird ein flüssiger Kunststoff beispielsweise in Form einer Schmelze 5 in den in dem geschlossenen Werkzeug 1.1 angeordneten Gewebeschlauch 3 injiziert. Dazu umfasst die Vorrichtung 1 eine nicht näher dargestellte Injektionsmaschine, welche manuell betätigbar ist oder automatisiert arbeitet.

Die Schmelze 5 ist beispielsweise ein flüssiger Kunststoff mit einer entsprechend über dessen Schmelzpunkt liegenden Temperatur, z.B. zwischen 100 Grad Celsius und 200 Grad Celsius. Besonders geeignet sind dazu einphasige, nicht wasserlösliche Thermoplaste, z. B. Polyamid, Polyolefin, Polypropylen, oder Duroplaste, z. B. Polyurethan.

Im dritten Schritt S3 wird ein Fluid 6, z.B. Wasser, in den Gewebeschlauch 3 mit einer entsprechend niedrigen Temperatur und entsprechend hohem Druck eingeführt, so dass sich die bereits injizierte Schmelze 5 vorzugsweise gleichmäßig auf dem und/oder in den Gewebeschlauch 3 an der äußeren und/oder inneren Wandung des Gewebeschlauchs 3 verteilt. Nach Einbringen des Fluids 6 in ein offenes Ende des Gewebeschlauchs 3 zur Austreibung eines Hohlraums H liegen die Fasern des Gewebeschlauchs 3 eingebettet in der erkalteten Schmelze 5. Damit ist ein endlosfaserverstärktes, thermoplastisches Strukturbauteil 2 mit einem Hohlkörperprofil entlang der Positivkontur des Werkzeugs 1.1 hergestellt.

Figuren 1A und 1 B zeigen alternative Ausführungsformen für die Austreibung des Hohlraums H mittels eines Stützelements S. Das Stützelement S gemäß Figur 1A ist als ein aufblasbares Hüllelement E, z. B. ein Ballon, ausgebildet. Das Hüllelement E wird in ein offenes Ende des bereits mit Schmelze 5 umgebenen Gewebeschlauches 3 eingeführt und unter einem vorgegebenen Druck mit einem Fluid 6, z. B. Luft, Wasser oder Gas, aufgeblasen, so dass ein Hohlraum H im Gewebeschlauch 3 entlang seiner Längsausdehnung ausgetrieben wird. Das Hüllelement E ist nach Erkalten der Schmelze 5 mit dem eingebetteten Gewebeschlauch 3 entfernbar oder kann gegebenenfalls verbleiben und bildet dann beispielsweise eine innere Wandung des hohlen Strukturbauteils 2.

In Figur 1B ist als alternatives Stützelement S ein Stützmaterial M, z. B. ein Schaummaterial, in ein offenes Ende des Gewebeschlauches 3 einbringbar.

In einem weiteren, nicht näher dargestellten Schritt wird das Organoblech 4 umgeformt und eine Oberfläche des Organoblechs 4 mit einer verstärkenden Struktur, vorzugsweise einer Rippenstruktur, hinterspritzt. Die Rippenstruktur ist vorzugsweise aus dem gleichen thermoplastischen Kunststoff wie das Organoblech 4 gebildet. Damit ist aus Organoblech 4 und Rippenstruktur ein integriertes und somit einstückiges Bauteil gebildet.

Die Anbindung des Organoblechs 4 an das Strukturbauteil 2 erfolgt vorzugsweise über die thermoplastische Matrix des Organoblechs 4 und/oder die thermoplastisch verstärkte, dem Organoblech 4 zugewandte Oberfläche des Strukturbauteils 2, wobei die thermoplastische Matrix entsprechend erwärmt wird, so dass das Strukturbauteil 2 eine stoffschlüssige Verbindung mit dem Organoblech 4 eingeht. D.h. es erfolgt eine oberflächenseitige Verschmelzung zwischen Strukturbauteil 2 und Organoblech 4.

Durch das geschlossene Hohlprofil weist das Strukturbauteil 2 eine vergleichsweise hohe Torsionssteifigkeit auf. Damit ist das Strukturbauteil 2 gegenüber Strukturbauteilen 2 mit offenen Profilen gewichtsreduziert und besonders biegesteif. Beispielsweise ist das Strukturbauteil 2 damit zur Herstellung einer Sitzlehnenrückwand für einen Fahrzeugsitz 7 geeignet.

Figur 4 zeigt in perspektivischer Ansicht einen beispielhaften Fahrzeugsitz 7 mit einem darauf positionierten Fahrzeuginsassen 8.

Beispielsweise ist mittels des Strukturbauteils 2 und des Organoblechs 4 eine Sitzlehnenrückwand des Fahrzeugsitzes 7 herstellbar, wobei in der eingespritzten Rippenstruktur des Organoblechs 4 Kopfstützenhülsen, Gurtumlenkung und/oder eine Aufnahme für eine Gurtaufrollvorrichtung ausgeformt sein können.

Alternativ oder zusätzlich ist es möglich, das Strukturbauteil 2 in einen im Fahrzeugsitzbezug angeordneten Kanal 9, ein sogenannter Trimkanal, anzuordnen.

### Bezugszeichenliste

- 1: Vorrichtung
- 1.1: Werkzeug
- 2: Strukturbauteil
- 3: Gewebeschlauch
- 4: Organoblech
- 5: Schmelze
- 6: Fluid
- 7: Fahrzeugsitz
- 8: Fahrzeuginsasse
- 9: Kanal

- B: Bauteil
- E: Hüllelement
- H: Hohlraum
- M: Stützmaterial
- S: Stützelement
- S1: erster Schritt
- S2: zweiter Schritt
- S3: dritter Schritt

## Patentansprüche

1. Verfahren zur Herstellung eines zumindest aus einem Strukturbauteil (2) und einem Organoblech (4) gebildeten Bauteils (B),
wobei
- in einem ersten Schritt (S1) ein Gewebeschlauch (3) in einer Kontur eines Werkzeugs (1.1) angeordnet und anschließend das Werkzeug (1.1) geschlossen wird,
- in einem zweiten Schritt (S2) ein Kunststoff, insbesondere eine Schmelze (5), in den in dem geschlossenen Werkzeug (1.1) angeordneten Gewebeschlauch (3) injiziert wird, und
- in einem dritten Schritt (S3) ein Fluid (6) und/oder ein Stützelement (S) in den Gewebeschlauch (3) unter Bildung eines Hohlraums (H) in dem Gewebeschlauch (3) eingebracht wird und nach Erkalten des Kunststoffs, insbesondere der Schmelze (5), diese zusammen mit eingebetteten Fasern des Gewebeschlauches (3) ein hohles Strukturbauteil (2) bilden, und
- ein umgeformtes und mit einem Kunststoff hinterspritztes Organoblech (4) stoffschlüssig mit dem Strukturbauteil (2) zur Bildung des Bauteils (B) verbunden wird.

2. Verfahren nach Anspruch 1,
**dadurch gekennzeichnet, dass** das Fluid (6) und/oder das Stützelement (S) mit einem vorbestimmbaren Druck eingebracht wird.

3. Verfahren nach Anspruch 1 oder 2,
**dadurch gekennzeichnet, dass** das Fluid (6) und/oder das Stützelement (S) derart in den Gewebeschlauch (3), insbesondere in ein offenes Ende, eingebracht wird, dass der Gewebeschlauch (3) in den bereits injizierten Kunststoff, insbesondere in die bereits injizierte Schmelze (5), weiter zumindest bereichsweise eingebettet wird.

4. Verfahren nach einem der vorhergehenden Ansprüche,
**dadurch gekennzeichnet, dass** das Organoblech (4) zumindest bereichsweise erwärmt wird.

5. Verfahren nach einem der vorhergehenden Ansprüche,
**dadurch gekennzeichnet, dass** das Organoblech (4) mit einem Kunststoff derart hinterspritzt wird, dass eine Rippenstruktur gebildet ist.

6. Verfahren nach einem der vorhergehenden Ansprüche,
**dadurch gekennzeichnet, dass** nach Erkalten der in den Gewebeschlauch (3) zumindest bereichsweise eingebetteten Schmelze (5) ein endlosfaserverstärktes Strukturbauteil (2) mit einem Hohlkörperprofil gebildet ist.

7. Bauteil (B) hergestellt nach einem Verfahren nach einem der Ansprüche 1 bis 6, umfassend
- ein aus einem erkalteten Kunststoff, insbesondere einer erkalteten Schmelze (5), mit eingebetteten Fasern eines Gewebeschlauches (3) gebildetes Strukturbauteil (2) und
- ein umgeformtes und hinterspritztes Organoblech (4), das mit dem Strukturbauteil (2) stoffschlüssig verbunden ist.

## Claims

1. A method for producing a component (B) formed at least from a structural component (2) and an organometallic sheet (4),
wherein
- in a first step (S1), a fabric hose (3) is arranged in a contour of a mold (1.1) and then the mold (1.1) is closed,
- in a second step (S2), a plastic, in particular a melt (5), is injected into the fabric hose (3) arranged in the closed mold (1.1) and,
- in a third step (S3), a fluid (6) and/or a supporting element (S) is introduced into the fabric hose (3) to form a cavity (H) in the fabric hose (3) and, after the plastic, in particular the melt (5), has cooled down, it forms a hollow structural component (2) together with embedded fibers of the fabric hose (3), and
- an organic sheet (4) shaped and backmolded with a plastic is connected to the structural component (2) in a material-bonded manner to form the component (B).

2. The method as claimed in claim 1,
**characterized in that** the fluid (6) and/or the supporting element (S) is introduced at a predeterminable pressure.

3. The method as claimed in claim 1 or 2, **characterized in that** the fluid (6) and/or the supporting element (S) is introduced into the fabric hose (3), in particular into an open end, in such a way that the fabric hose (3) is embedded further into the already injected plastic, in particular into the already injected melt (5), at least in certain regions.

4. The method as claimed in one of the preceding claims,
**characterized in that** the organic sheet (4) is heated, at least in certain regions.

5. The method as claimed in one of the preceding claims,
**characterized in that** the organic sheet (4) is backmolded with a plastic in such a way that a rib structure is formed.

6. The method as claimed in one of the preceding claims,
**characterized in that**, after the melt (5) embedded at least in certain regions into the fabric hose (3) has cooled down, a continuous fiber-reinforced structural component (2) with a hollow body profile is formed.

7. A component (B) produced by a method as claimed in one of claims 1 to 6, comprising
- a structural component (2) formed from a cooled-down plastic, in particular a cooled-down melt (5), with embedded fibers of a fabric hose (3) and
- a shaped and backmolded organic sheet (4), which is connected to the structural component (2) in a material-bonded manner.

## Revendications

1. Procédé de fabrication d'un composant (B) formé au moins par un composant structural (2) et une tôle organique (4),
selon lequel
- lors d'une première étape (S1), un tuyau en tissu (3) est agencé dans un contour d'un outil (1.1), puis l'outil (1.1) est fermé,
- lors d'une deuxième étape (S2), un plastique, notamment une masse fondue (5), est injecté dans le tuyau en tissu (3) agencé dans l'outil (1.1) fermé, et
- lors d'une troisième étape (S3), un fluide (6) et/ou un élément support (S) est introduit dans le tuyau en tissu (3) avec formation d'une cavité (H) dans le tuyau en tissu (3) et, après refroidissement du plastique, notamment de la masse fondue (5), celui-ci forme conjointement avec des fibres incorporées du tuyau en tissu (3) un composant structural creux (2), et
- une tôle organique (4) formée et surmoulée par injection avec un plastique est reliée par accouplement de matière avec le composant structural (2) pour former le composant (B).

2. Procédé selon la revendication 1, **caractérisé en ce que** le fluide (6) et/ou l'élément support (S) est introduit avec une pression déterminable.

3. Procédé selon la revendication 1 ou 2, **caractérisé en ce que** le fluide (6) et/ou l'élément support (S) est introduit dans le tuyau en tissu (3), notamment dans une extrémité ouverte, de sorte que le tuyau en tissu (3) soit davantage incorporé au moins dans certaines sections dans le plastique déjà injecté, notamment dans la masse fondue (5) déjà injectée.

4. Procédé selon l'une quelconque des revendications précédentes, **caractérisé en ce que** la tôle organique (4) est chauffée au moins dans certaines sections.

5. Procédé selon l'une quelconque des revendications précédentes, **caractérisé en ce que** la tôle organique (4) est surmoulée par injection avec un plastique de manière à former une structure nervurée.

6. Procédé selon l'une quelconque des revendications précédentes, **caractérisé en ce qu'**après le refroidissement de la masse fondue (5) incorporée au moins dans certaines sections dans le tuyau en tissu (3), un composant structural (2) renforcé par des fibres continues ayant un profilé de corps creux est formé.

7. Composant (B) fabriqué par un procédé selon l'une quelconque des revendications 1 à 6, comprenant :
- un composant structural (2) formé par un plastique refroidi, notamment une masse fondue (5) refroidie, avec des fibres incorporées d'un tuyau en tissu (3), et
- une tôle organique (4) formée et surmoulée par injection, qui est reliée par accouplement de matière avec le composant structural (2).
